# EUROPÄISCHE PATENTSCHRIFT

(11) **EP 1 250 996 B1**
(45) Veröffentlichungstag und Bekanntmachung des Hinweises auf die Patenterteilung: **07.06.2006**
(21) Anmeldenummer: 02007443.1
(22) Anmeldetag: 30.03.2002
(51) Int. Cl.: B29C 65/08

(54) **Sonotrode für eine Ultraschall-Schweissanlage**
Sonotrode for an ultrasonic welding apparatus
Sonotrode pour un dispositif de soudage par ultrasons

(30) Priorität: 21.04.2001 DE 10119614; 08.12.2001 DE 10160496
(43) Veröffentlichungstag der Anmeldung: 23.10.2002
(73) Patentinhaber: Dynamit Nobel Kunststoff GmbH, 91781 Weissenburg (DE)
(72) Erfinder: Schmidt, Gerhard, 91781 Weissenburg (DE)
(74) Vertreter: Scherzberg, Andreas Hans

(56) Entgegenhaltungen:
- EP-A- 0 256 509
- DE-A- 10 059 160
- DE-A- 19 911 890
- FR-A- 2 135 058
- US-A- 3 563 822
- US-A- 3 607 580
- US-A- 4 767 492
- US-A- 5 076 870
- US-A- 5 938 873
- PATENT ABSTRACTS OF JAPAN vol. 008, no. 224 (M-331), 13. Oktober 1984 (1984-10-13) -& JP 59 106329 A (BURANSON URUTORASONITSUKUSU CORPORATION;OTHERS: 01), 20. Juni 1984 (1984-06-20)
- PATENT ABSTRACTS OF JAPAN vol. 008, no. 280 (M-347), 21. Dezember 1984 (1984-12-21) -& JP 59 148629 A (MIKUNI SEISAKUSHO:KK;OTHERS: 01), 25. August 1984 (1984-08-25)
- PATENT ABSTRACTS OF JAPAN vol. 013, no. 234 (M-832), 30. Mai 1989 (1989-05-30) -& JP 01 045624 A (ICHIKOH IND LTD), 20. Februar 1989 (1989-02-20)
- PATENT ABSTRACTS OF JAPAN vol. 018, no. 348 (M-1630), 30. Juni 1994 (1994-06-30) -& JP 06 087165 A (ISHII HIYOUKI:KK), 29. März 1994 (1994-03-29)

## Beschreibung

Die Erfindung betrifft eine Sonotrode für eine Ultraschall-Schweißanlage nach dem Oberbegriff des Anspruchs 1.

Schweißen ist eine Vereinigung von Werkstoffen unter Wärme und Druck. Die Wärme wird hierbei folgendermaßen erzeugt:

Ein Generator liefert hochfrequente (z. B. 35kHz) elektrische Energie, welche im Schallwandler (Konverter) mittels Piezoelementen in mechanische Längsschwingungen umgewandelt werden.

Diese hochfrequenten Schwingungen werden gegebenenfalls über einen Booster an eine Sonotrode übertragen und bewirken durch innere Reibung eine Aufheizung des zu verschweißenden Kunststoffs. Die Sonotrode wird hierbei mit den zu verschweißenden Teilen in Verbindung gebracht.

Der thermoplastische Kunststoff wird beim Anlegen der Sonotrode verflüssigt. Beim Abkühlen unter Druck entsteht eine Verbindung, welche Kräfte übertragen kann.

Je nach Kunststoff unterscheidet man z. B. zwischen "Fernfeldschweißen" (geeignet nur für harte, spröde Kunststoffe mit geringem mechanischen Verlustfaktor), bei dem die hochfrequente Schwingung mit geringen Verlusten durch das Formteil hindurch zur Schweißstelle geleitet wird. Im Gegensatz dazu gibt es das "Nahfeldschweißen" oder "Kontaktschweißen", bei dem der Abstand zwischen Schalleinleitung und Schweißstelle gering ist, da die Schwingung im weichen Kunststoff schnell abgedämpft wird.

Bei der flächigen Verschweißung mittels Ultraschall wird eine Wärmeenergie (z. B. 300 .. 1200 Ws am Generator) pro Schweißstelle lokal in den Kunststoff eingebracht.

Bei der flächigen Verschweißung mittels Ultraschall wird eine Wärmeenergie (z. B. 300 .. 1200 Ws am Generator) pro Schweißstelle lokal in den Kunststoff eingebracht.

Problematisch sind dabei Einfallstellen, welche sich auf der, der Verschweißung gegenüberliegenden Seite (z. B. lackierte Sichtfläche eines Stoßfängers für Kraftfahrzeuge) bilden.

Beim Ultraschallschweißen z. B. von Schließteilen in die Stoßfänger-Außenhaut eines PKW wird heute üblicherweise mittels eines Schweißdomes (Rippe), auf den eine geschlitzte Lasche aufgeschoben wird, durch Nieten des Domes (pilzförmiger Wulst) eine kraftschlüssige Verbindung erzielt.

Durch designbedingte Fugen, Kanten etc. war es bisher möglich, Rippen mit an die Außenhaut anzuspritzen, ohne dass die resultierenden Einfallstellen störend auffielen.

Wenn Rippen nicht möglich waren, wurde mit sog. "Flachsonotroden" "direkt", also flächig verschweißt.

Dabei ergeben sich störende Einfallstellen, welche vom Kunden normalerweise nicht akzeptiert werden.

US 5,076,870 zeigt sämtliche Merkmale des Oberbegriffs des Anpruchs 1. Nicht gezeigt ist jedoch die Verwendung der Sonotrode zum Verschweißen von Außenteilen von Kraftfahrzeugen, wie Stoßfänger mit ihren Innenteilen, also Bauteile mit optischen Anforderungen und dazugehörige Anbau- und Versteifungselemente.

In der US 5,076,870 wird die Verschweißung eines Teppichs beschrieben, wobei die Verschweißung durch den Teppichflor hindurch erfolgt. Hier tritt das Problem der Einfallstellen auf der der Verschweißung gegenüberliegenden Seite nicht auf.

US 4,767,492 beschreibt eine Ultraschall-Schweißvorrichtung mit einem Schallstrahlermittel und einem Amboss.

EP 0256 509 beschreibt eine Ultraschall-Schweißanlage, wobei auf der der Schweißung gegenüber liegenden Fläche ein Muster von Erhebungen und Vertiefungen eingebracht wird.

Der Erfindung liegt die Aufgabe zu Grunde, eine Sonotrode für eine Ultraschall-Schweißanlage nach dem Oberbegriff des Anspruchs 1 so zu verbessern, dass störende Einfallstellen vermieden werden.

Erfindungsgemäß wird diese Aufgabe durch die Merkmale des Anspruchs 1 gelöst. Die Energieeinbringung erfolgt nicht mehr über die Kontaktfläche, sondern über die Zapfen.

Erfindungsgemäß sind diese kegelförmig ausgebildet, wodurch ein leichteres Einstechen in den Werkstoff ermöglicht ist.

Die Konizität der Zapfen beträgt zwischen 5° und 20°, bevorzugt ca. 10° zur Spitze hin.

Bevorzugt liegt die Länge der Zapfen geometrieabhängig bei zwei zu verschweißenden Bauteilen der Wandstärken von 2,7 und 3,6 mm zwischen 4 und 5 mm, vorzugsweise bei 4,3 mm.

In bevorzugter Ausführungsform sind auf der Kontaktfläche der Sonotrode zumindest zwei parallele Reihen von Zapfen vorgesehen, wobei die beiden äußeren Reihen acht Zapfen und die innerste Reihe aus neun Zapfen besteht. Grundsätzlich ist jede Ausführung einsetzbar, bei der die Zapfen in der Draufsicht symmetrisch zu zwei zueinander senkrechten Achsen angeordnet sind.

Bevorzugt weist die Spitze der Zapfen einen in Längsrichtung symmetrischen dreieckigen Querschnitt auf mit einem Spitzenwinkel α von 60°<α<150°, bevorzugt α = 120°.

Vorteilhafterweise wird die Sonotrode zum Schweißen von thermoplastischen Kunststoffen verwendet, insbesondere zum Verschweißen von Außenteilen von Kraftfahrzeugen, wie Stoßfänger mit ihren Innenteilen, also Bauteile mit optischen Anforderungen und dazugehörige Anbau- und Versteifungselemente.

Besonders vorteilhaft erweist es sich im Hinblick auf die Problematik der Einfallstellen, wenn die Teile vor dem Schweißen lackiert werden.

Aus Versuchen mit verschiedenen Sonotrodenformen hat sich ergeben, dass eine bestimmte Sonotrodenform, sog. "Fakirsonotrode" vorteilhafte Eigenschaften in Bezug auf die oben genannte Einfallstellenproblematik bietet. Versuche mit dieser Form ergaben durchweg die besten optischen Ergebnisse.

Die erfindungsgemäße Geometrie der Sonotrode besteht aus einer Vielzahl von kleinen Zapfen, welche eine Konizität (hier: ca. 10°) aufweisen (leichtes Entformen beim Herausfahren der Sonotrode), sowie eine Spitze (begünstigt das Anschmelzen). Durch die vielen kleinen Spitzen wird die benötigte Wärmeenergie besonders schonend bzw. gut verteilt in den Kunststoff eingebracht, was in geringen Einfallstellen resultiert. Die Länge der Zapfen wurde für die zu verschweißenden Wandstärken (2,7 mm auf 3,6 mm) in einem Versuch ermittelt. Günstig war hierbei die Zapfenlänge 4,3 mm.

Nachfolgend einige Beispiele mit einer erfindungsgemäßen Sonotrode.

Einfluss der Reihenfolge von Schweißen und Lackieren:

Beim Schweißen von unlackierten Teilen der Wandstärken (2,7/3,0 mm) wurden Abzugskräfte von (270±30)N erreicht. Die anschließend lackierte Oberfläche zeigte schwache Einfallstellen.

Diese Einfallstellen konnten deutlich minimiert werden, wenn (bei ansonsten gleichen Bedingungen) eine lackierte Probeplatte verschweißt wurde. Allerdings sollte die zu verschweißende Seite frei von Lackspuren sein, um die Verschweißung nicht zu beeinträchtigen. Um die lackierte Oberfläche nicht zu beschädigen, sollte die Vorrichtung entsprechend ausgepolstert sein.

Es ist festzustellen, dass ein vorheriges Lackieren sich positiv auf die optische Qualität der Sichtfläche im Hinblick auf Einfallstellen auswirkt. Die Erklärung hierfür dürfte in der Wärmeeinwirkung beim Lackieren liegen.

Diese Erklärung konnte in einem Versuch, bei dem ein vorher getempertes Teil verschweißt wurde und mit einem ungetempert verschweißtem Teil verglichen wurde, bestätigt werden: Der Einfall beim getemperten Teil ist geringer als beim ungetemperten, allerdings nicht unbedingt in dem Maße, wie beim lackierten Teil. Vermutlich hat die Lackschicht ebenfalls eine positive Wirkung bei der Reduzierung der Einfallstellen.

### Einfluss der Wandstärke:

Eine Erhöhung der Wandstärke der Stoßfänger von 3,0 mm auf 3,6 mm verringerte die Einfallstellen deutlich:

Für einen Schweißversuch mit einer Fakirsonotrode, Wandstärken von (2,7/3,6 mm) und dem Verschweißen der unlackierten Teile konnten Abzugskräfte von (300±40)N gemessen werden. Die anschließend lackierten Probeplatten zeigten nahezu keine Einfallstellen mehr.

### Einfluss der Zapfenlänge/Eintauchtiefe:

Ausgehend von der ursprünglichen Fakirsonotrode (Zapfenlänge 3 mm) wurde eine Fakirsonotrode mit kürzeren Zapfen (Zapfenlänge 3,4 mm) angefertigt, um zu untersuchen, ob auf diese Weise eine Verminderung der Einfallstellen zu erreichen ist.

Dabei stellte sich heraus, dass mit dieser kurzen Zapfenlänge eine zuverlässige Verschweißung (Wandstärken (2,7/3,0, Abzugskraft >200N) nur zu erreichen ist, wenn die Sonotrode komplett abgesenkt wird, d. h. die gesamte Sonotrode zeichnet sich im Bauteil ab. Hierbei wird sehr viel Energie (>700Ws) in den Kunststoff eingebracht; die Einfallstellen sind stark ausgeprägt. Günstiger sind also lange Zapfen, da hierbei der Sonotrodengrund die zu verschweißenden Platten nicht berührt; es zeichnen sich nur die Zapfen ab. Nur etwa halb soviel Energie (um 300Ws) wird bei ansonsten gleichen Bedingungen benötigt, um die Bauteile zu verschweißen und die Einfallstellen sind weniger ausgeprägt.

Für eine ausreichende Verschweißung (Abzugskraft >200N) ist es also nicht erforderlich, die Sonotrode bis zum Zapfengrund abzusenken. Der Anpressdruck kann allein über die Niederhalter aufgebracht werden. Dies wird bei der sog. "Tiefenabschaltung" ausgenutzt, hierbei wird der Ultraschall abgeschaltet, sobald die Sonotrode eine definierte Tiefe erreicht hat.

Weitere Merkmale ergeben sich aus den Figuren, die nachfolgend beschreiben sind. Es zeigt:
- Fig. 1: eine erfindungsgemäße Sonotrode,
- Fig. 2: einen einzelnen Zapfen der Sonotrode und
- Fig. 3: eine Ansicht der Kontaktfläche der Sonotrode.

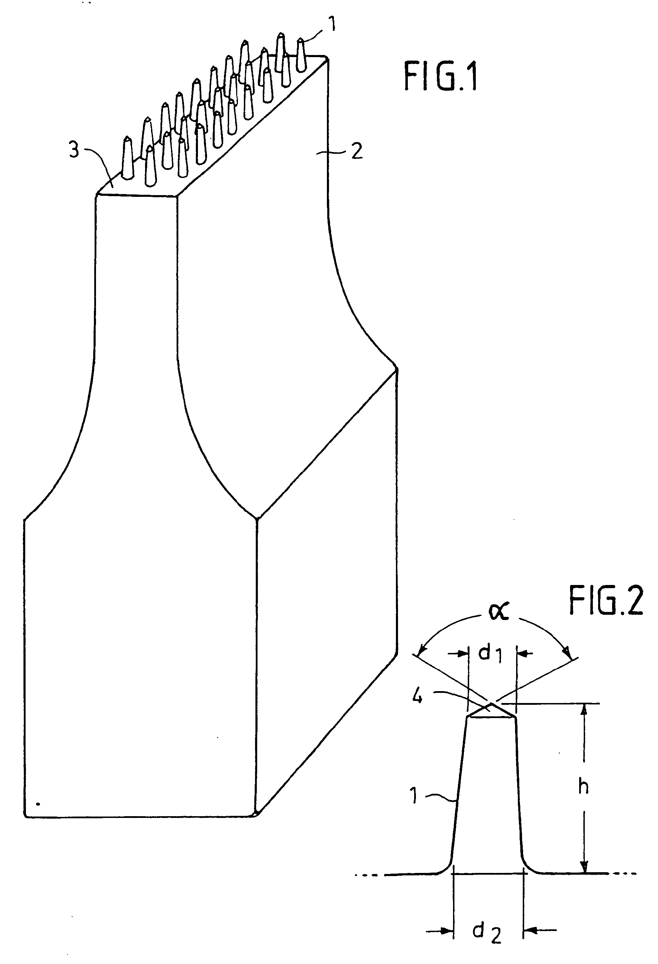

Fig. 1 zeigt eine erfindungsgemäße Sonotrode 2, auch Fakirsonotrode genannt. Diese Sonotrode ist -nicht gezeigt- über gegebenenfalls einem Booster mit dem Schallwandler (Konverter) einer Ultraschall-Schweißanlage verbunden.

Die Kontaktfläche 3 der Sonotrode 2 weist drei Reihen von Zapfen 1 auf, wobei die innerste Reihe neun Zapfen 1 aufweist und die beiden äußersten Reihen jeweils acht Zapfen 1.

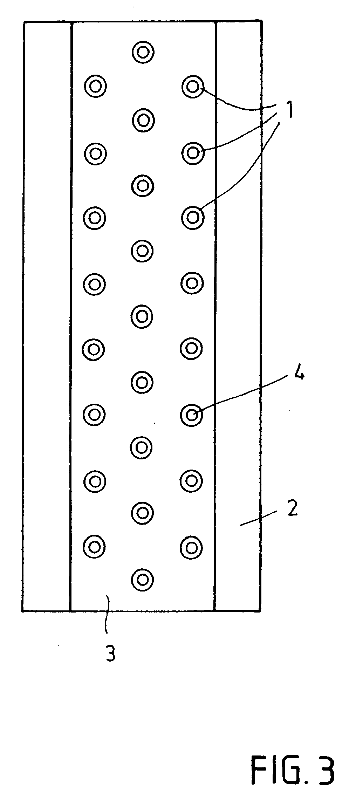

Fig. 3 zeigt eine Draufsicht auf die Kontaktfläche 3 mit den einzelnen Zapfen 1 der Sonotrode 2.

Fig. 2 zeigt einen einzelnen Zapfen. Die Zapfenlänge ist mit h bezeichnet. Der Zapfen 1 ist kegelförmig ausgebildet, wobei sich der Zapfen 1 zur Spitze hin um ca. 10° verjüngt. Die Spitze 4 des Zapfens 1 weist einen pyramidenförmigen Querschnitt auf mit einem Spitzenwinkel α von 120°. Der an der Kontaktfläche 2 sich befindliche Fuß des Zapfens 1 hat einen Durchmesser von d₂ = 2,0 mm, und der Durchmesser an der Spitze 4 beträgt d₁ = 1,4 mm.

## Patentansprüche

1. Sonotrode für eine Ultraschall-Schweißanlage mit einem UltraschallGenerator, der hochfrequente elektrische Energie an einen Konverter leitet, dieser die Energie in mechanische Schwingungen umwandelt und gegebenenfalls über einen Booster an eine Sonotrode (2) leitet, wobei die Sonotrode (2) mit einer Kontaktfläche (3) ausgebildet ist, auf der Kontaktfläche (3) Zapfen (1) angeordnet sind und die Zapfen (1) kegelförmig ausgebildet sind, **dadurch gekennzeichnet, dass** die Konizität der Zapfen (1) zwischen 5° und 20°, bevorzugt ca. 10° zur Spitze hin beträgt.

2. Sonotrode nach Anspruch 1, **dadurch gekennzeichnet, dass** die Länge (h) der Zapfen (1) geometrieabhängig bei zwei zu verschweißenden Bauteilen der Wandstärken 2,7 und 3,6 mm zwischen 4 und 5 mm, vorzugsweise 4,3 mm beträgt.

3. Sonotrode nach Anspruch 1 oder 2, **dadurch gekennzeichnet, dass** die Zapfen (1) in der Draufsicht achsensymmetrisch zu zwei zueinander senkrechten Achsen angeordnet sind, z.B. in 3 parallelen Reihen mit außen acht Zapfen (1) und neun Zapfen (1) in der Mitte.

4. Sonotrode nach einem der Ansprüche 1 bis 3, **dadurch gekennzeichnet, dass** die Spitze (4) der Zapfen (1) einen in Längsrichtung symmetrischen dreieckigen Querschnitt aufweist, mit einem Spitzenwinkel α von 60°<α<150°, bevorzugt α = 120°.

5. Verwendung einer Sonotrode nach einem der Ansprüche 1 bis 4 zum Verschweißen von Außenteilen von Kraftfahrzeugen, wie Stoßfänger mit ihren Innenteilen, also Bauteile mit optischen Anforderungen und dazugehörige Anbau- und Versteifungselemente.

6. Verfahren zum Schweißen von Kunststoffteilen mit einer Sonotrode (2) nach einem der Ansprüche 1 bis 5, **dadurch gekennzeichnet, dass** die Teile vor dem Schweißen lackiert werden.

## Claims

1. Sonotrode for an ultrasonic welding device with an ultrasound generator that supplies high-frequency electrical energy to a converter that converts this energy into mechanical vibrations and conveys the latter optionally via a booster to a sonotrode (2), the sonotrode (2) having a contact surface (3) on which pegs (1) are arranged, the pegs (1) being conically shaped, **characterised in that** the conicity of the pegs (1) is between 5° and 20°C, preferably ca. 10°, relative to the tip.

2. Sonotrode according to claim 1, **characterised in that** the length (h) of the pegs (1) in the case of two structural parts to be welded of wall thicknesses 2.7 mm and 3.6 mm is, depending on the geometry, between 4 and 5 mm, preferably 4.3 mm.

3. Sonotrode according to claim 1 and 2, **characterised in that** the pegs (1) in plan view are arranged axially symmetrically with respect to two mutually perpendicular axes, for example in three parallel rows, the outer rows each containing eight pegs (1) and the middle row containing nine pegs (1).

4. Sonotrode according to one of claims 1 to 3, **characterised in that** the tip (4) of the pegs (1) has a triangular cross-section symmetrical in the longitudinal direction, with an apex angle α of 60°<α<150°, preferably α = 120°.

5. Use of a sonotrode according to one of claims 1 to 4 for welding external parts of vehicles, such as bumpers, to their internal parts, i.e. structural parts with optical requirements, and associated installation and reinforcing elements.

6. Method for welding plastics parts using a sonotrode (2) according to one of claims 1 to 5, **characterised in that** the parts are lacquered before being welded.

## Revendications

1. Sonotrode pour un dispositif de soudage par ultrasons, comprenant un générateur d'ultrasons qui envoie de l'énergie électrique à haute fréquence à un convertisseur, celui-ci convertit cette énergie en vibrations mécaniques et les transmet éventuellement par l'intermédiaire d'un booster à une sonotrode (2) qui présente une surface de contact (3) sur laquelle sont montées des chevilles (1) de forme conique, **caractérisée en ce que** la conicité des chevilles (1), en direction de la pointe, est comprise entre 5° et 20°, de préférence environ 10°.

2. Sonotrode selon la revendication 1, **caractérisée en ce que** la longueur (h) des chevilles (1), pour des composants à souder présentant des épaisseurs de paroi de 2,7 et de 3,6 mm; est comprise entre 4 et 5 mm, de préférence égale à 4,3 mm.

3. Sonotrode selon la revendication 1 ou 2, **caractérisée en ce que** les chevilles (1) sont symétriques en plan par rapport à deux axes rectangulaires, en étant par exemple disposées selon trois lignes parallèles avec huit chevilles sur les lignes extérieures et neuf chevilles sur la ligne médiane.

4. Sonotrode selon une des revendications 1 à 3, **caractérisée en ce que** la pointe (4) de chaque cheville (1) présente une section triangulaire symétrique en direction longitudinale, avec un angle de pointe α compris entre 60° et 150°, de préférence égal à 120°.

5. Utilisation d'une sonotrode selon les revendications 1 à 4, pour souder des parties extérieures de véhicules automobiles telles que des parechocs, sur des parties intérieures, c'est-à-dire des composants présentant des exigences d'aspect sur des éléments de montage et de raidissement correspondants.

6. Procédé pour souder des pièces en matière plastique en utilisant une sonotrode (2) selon une des revendications 1 à 5, **caractérisé en ce que** les pièces sont peintes avant d'être soudées.
